# EUROPEAN PATENT SPECIFICATION

(11) **EP 0 774 728 B1**
(45) Date of publication and mention of the grant of the patent: **12.02.2003**
(21) Application number: 96118636.8
(22) Date of filing: 20.11.1996
(51) Int. Cl.: G06K 7/08

(54) **Magnetic ink character detection apparatus and method**
Gerät und Verfahren zum Erkennen von Zeichen mit magnetischer Tinte
Appreil et méthode de détection de caractères à encre magnétique

(30) Priority: 20.11.1995 JP 30172195
(43) Date of publication of application: 21.05.1997
(73) Proprietor: SEIKO EPSON CORPORATION, Tokyo 163 (JP)
(72) Inventor: Takahashi, Eizo, Suwa-shi, Nagano-ken, 392 (JP)
(74) Representative: Hoffmann, Eckart, Dipl.-Ing.

(56) References cited:
- EP-A- 0 134 110
- EP-A- 0 565 759
- PATENT ABSTRACTS OF JAPAN vol. 014, no. 189 (P-1037), 17 April 1990 & JP 02 035582 A (NIPPON SIGNAL CO LTD:THE), 6 February 1990,

## Description

This invention relates to an apparatus and method for detecting MICs (Magnetic Ink Characters) printed on a medium such as a personal check, identification card, etc.

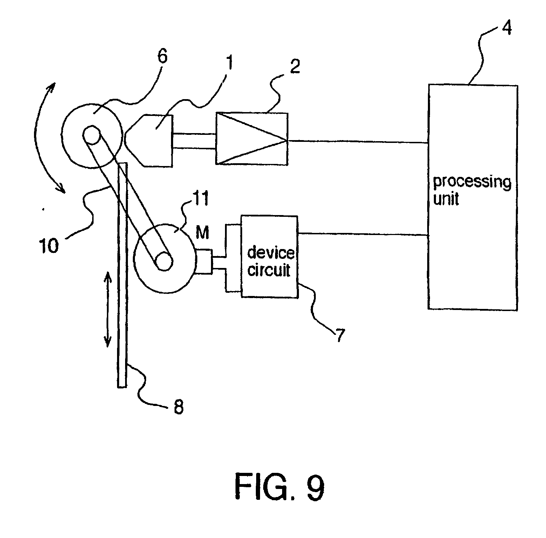

MICs, i.e. characters printed by use of magnetic ink on a carrier medium form one well-known kind of machine-readable information. Fig. 9 shows a schematic view of a conventional apparatus for detecting, i.e. reading and recognizing, MICs. In Fig. 9, magnetic head 1 is used as a magnetic signal detection means, and DC motor 11 is used as a drive source of a transport mechanism for transporting medium 8 which carries MICs to be read. The transport mechanism further comprises roller 6 driven by motor 11 via transmission belt 10. When an MIC on medium 8 passes over magnetic head 1, magnetic head 1 converts the magnetic flux generated by the MIC into an electrical signal. Amplifier 2 amplifies the signal and applies the amplified signal to processing unit 4. Processing unit 4 analyzes the signal to recognize the character represented by the signal.

Generally, the head gap of a magnetic head is provided in the direction in which the medium is transported. The head gap height, i.e., the length of the head gap in the direction perpendicular to the transport direction, is greater than the height of the MICs. Prior to their detection, the MICs are remagnetized to a specified polarity. This causes the electrical signal output by the magnetic head to represent changes in the height component (also referred to as the vertical component) of an MIC (more particularly, changes in the total length of that component in the height or vertical direction).

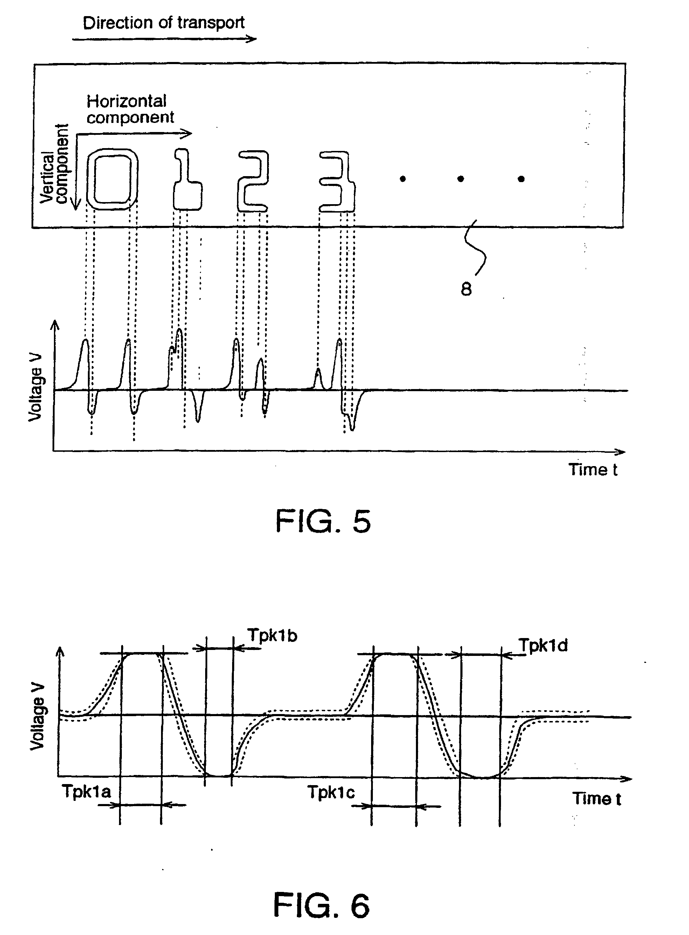

The shapes of MICs are standardized under ISO/R1004, so that fixed electrical signal waveforms are produced at a predetermined transport speed of the medium. Fig. 5 shows an example of MICs printed on medium 8. MICs may be printed in either of two fonts: E13B and CMC7. The font shown in the figure is E13B. The signal waveform shown in the lower portion of the figure represents the signal output from amplifier 2, when medium 8 in Fig. 5 is read (scanned) from "0" to "3".

In the signal waveform in Fig. 5, a positive peak reflects the start of a character or an increase in its vertical component, while a negative peak reflects the end of a character or a decrease in its vertical component. As will be understood, a change (increase/decrease) in the vertical component means a transition of the magnetic head's scanning position to a position where the head gap "sees" more/less magnetic ink across its height than before. The magnitude of a peak depends upon the rate of increase or decrease of the vertical component.

In detecting an MIC, the apparatus first detects the positive and negative peaks in the amplified signal, and then it determines the peak positions on the time axis, i.e., the relative timing of the peaks. The apparatus can detect the start of an MIC by detecting the first positive peak position of the waveform or the first positive peak position following the end of a (preceding) character. The end of a character can be detected as the presence or absence of positive and negative peaks over a fixed time interval that depends on the transport speed of the medium and corresponds to the character spacing.

Each MIC has a unique peak pattern of positive and negative peaks the peak pattern including the relative positions of the peaks along a time axis. The corresponding peak patterns for all MICs to be recognized are prestored in the detection apparatus. Thus, for character recognition, after reading a character and converting the resulting electrical signal to such peak pattern, this peak pattern can be compared with the prestored peak patterns. When a matching one of the prestored peak patterns is found, the read MIC is recognized as the MIC associated with that matching one of the prestored peak patterns.

The prior art described above which reads the MICs with a predetermined fixed speed suffers from problems in cases where the conditions under which MICs are printed differ from one medium to another in such a way that the absolute values of positive and negative peaks of the electrical signal vary from one medium to another. For instance, if the magnetic ink contains a high concentration of a magnetic material, or the character height is relatively great because of an increase in the width of lines composing characters due to print smudging (hereinafter referred to as a "positive scattering"), the signal peaks that are output by the magnetic head tend to have greater absolute values than normal. Conversely, if the concentration of magnetic material is low or the character height is relatively small due to a decrease in line width (hereinafter referred to as a "negative scattering"), the signal peaks that are output by the magnetic head tend to have smaller absolute values than normal.

In case of a positive scattering, the greater absolute values of the peaks in the electrical signal may exceed the dynamic range of amplifier 9 resulting in waveform saturation as shown in Fig. 6. In the figure, the intervals indicated by Tpk1a to Tpk1d are saturation intervals. If there are saturation intervals, the exact position at which the respective peak occurs is indeterminate. This means character recognition is no longer reliable.

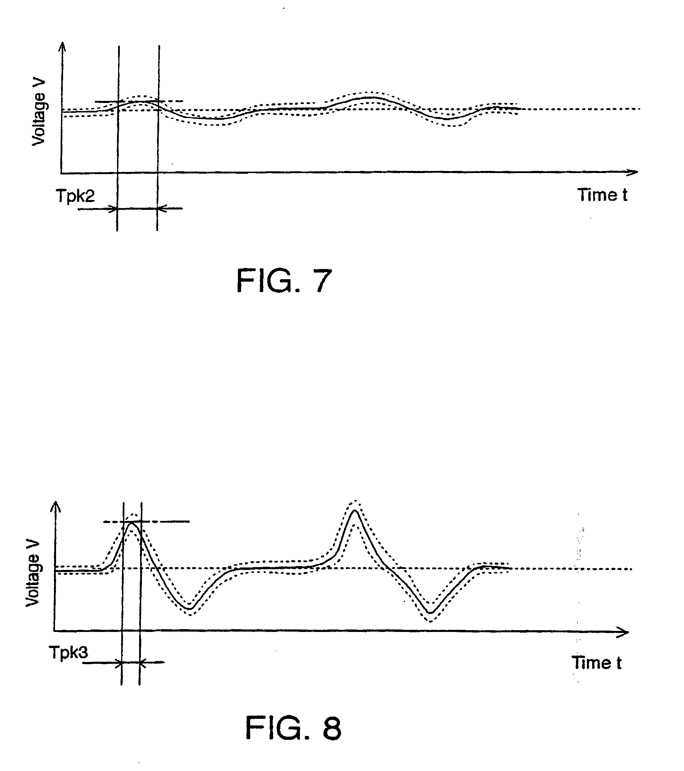

By contrast, in case of negative scattering, the detection signal that is output from the magnetic head has a relatively small amplitude. Consequently, the amplitude of the signal that is output by the amplifier 2 is also relatively small, as shown in Fig. 7. As indicated by the broken lines in Fig. 7, normally a signal waveform has external noise, such as magnetic noise, superposed. Therefore, if the position of a peak in the signal waveform is detected by using a conventional peak detection method, the detected peak position will fluctuate within the range indicated by Tpk2 in Fig. 7. In this case character recognition is also no longer reliable.

Therefore, in the aforementioned recognition method that uses peak positions of the detection signals for the recognition of characters, the inability to accurately determine peak positions results in a decrease in the recognition probability of MICs.

JP-A-2-035582/1990 discloses a method and device for reading a magnetic card. The magnetic card is moved past a magnetic head. In response to this the magnetic head generates an electrical signal. This signal is applied to a threshold detector for comparison against a threshold value. If noise exceeeding the threshold value is detected in the signal, the speed with which the magnetic card is moved past the magnetic head is reduced, thereby to avoid noise being misinterpreted as a useful signal.

An object of the present invention is to provide a magnetic ink character detection apparatus and method capable of reliably detecting magnetic ink characters even under such conditions referred to above as positive and negative scattering.

This object is achieved with an apparatus as claimed in claim 1 and a method as claimed in claim 8, respectively. Preferred embodiments of the invention are subject-matter of the dependent claims.

According to an embodiment of the invention a medium carrying MICs is moved relative to a magnetic head. The medium may have any shape such as a sheet, card or tape form suitable for such relative movement, and may be of any material capable of carrying MICs thereon and allowing them to be detected by the magnetic head. The amplitude of signals output by the magnetic head as the medium is moved relative to the magnetic head is detected. In response to the detected amplitude the speed of the relative movement is automatically adjusted, if necessary, to ensure that the amplitude is large enough though not causing saturation. This avoids problems such as those involved in positive and negative scattering explained above, and enables a reliable detection of the temporal relation or relative timing between positive and negative peaks in the signals.

Preferred embodiments of the invention will be described in detail below with reference to the drawings.
- Fig. 1: shows a functional block diagram illustrating the fundamental principle of the present invention.
- Fig. 2: shows a schematic view of a first embodiment of the apparatus of the present invention.
- Fig. 3: shows a flowchart depicting the operation of an embodiment of the present invention.
- Fig. 4: shows a schematic view of second embodiment of the apparatus of the present invention.
- Fig. 5: shows a medium on which MICs are printed and the corresponding signal waveform obtained when the medium is read by means of a magnetic head.
- Fig. 6: shows a signal waveform obtained in case of positive scattering.
- Fig. 7: shows a signal waveform obtained in case of negative scattering.
- Fig. 8: shows a signal waveform with optimal signal amplitudes after a speed correction.
- Fig. 9: shows a schematic view of a conventional detection apparatus.

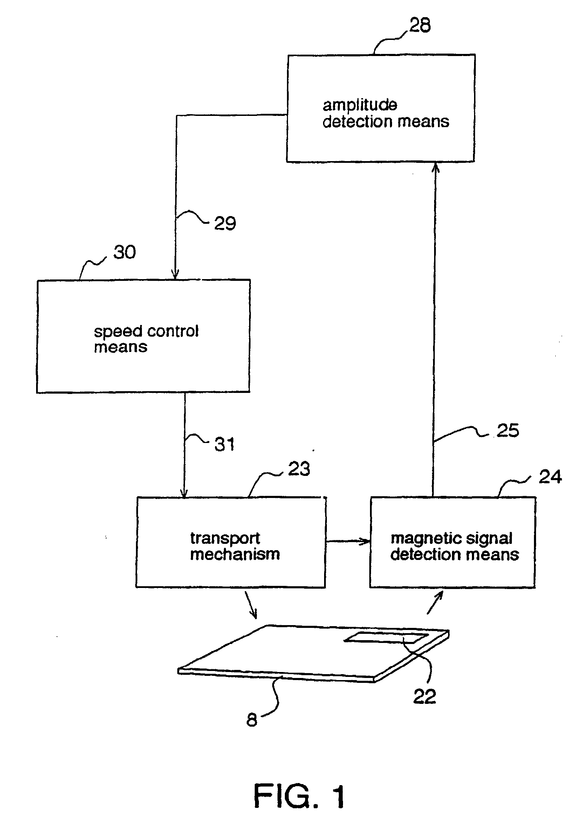

Fig. 1 is a functional block diagram illustrating the fundamental principle of the present invention. Medium 8, on which MICs 22 are printed, and magnetic signal detection means 24 are moved relative to each other by transport mechanism 23. The speed at which they are moved is set by speed control means 30 to be described later. While moving relative to medium 8, magnetic signal detection means 24 converts the magnetic signals detected from MICs 22 into electrical signals 25 and transmits them to amplitude detection means 28. Amplitude detection means 28 detects the amplitude of signals 25, i.e., peak values, and transmits corresponding amplitude information 29 to speed control means 30. Based upon both, amplitude information 29 and the current speed, speed control means 30 determines a new speed and applies a corresponding control signal 31 to transport mechanism 23. Then, as described above, transport mechanism 23 moves medium 8 relative to magnetic signal detection means 24 at a speed corresponding to control signal 31.

It goes without saying that the new speed is set so that at that speed, signal 25 will have an appropriate amplitude. Thus, when signal 25 is in a saturated state amplitude information 29 will represent the extent of the saturation and a slower speed will be determined in accordance with the extent of the saturation. When the amplitude of signal 25 is smaller than a certain threshold value, amplitude information 29 will represent the extent to which the amplitude is smaller and a faster speed will be determined based upon the extent to which the amplitude is smaller.

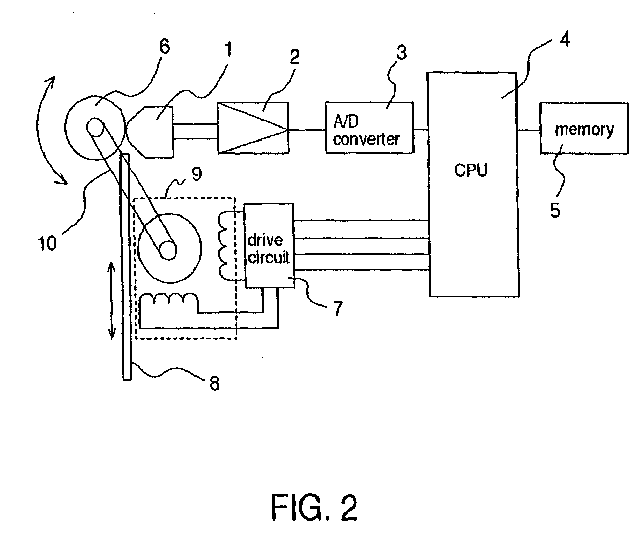

Fig. 2 shows a schematic view of a first embodiment of the apparatus according to the invention. Medium 8, on which MICs are printed, is transported by roller 6. Roller 6 is driven by stepping motor 9 through transmission belt 10. Roller 6 is made of rubber or any other material having an appropriate friction coefficient relative to the material of medium 8. By rotating the motor either in one direction or the opposite direction, the medium can be moved either forward or backward.

Stepping motor 9 is a so-called hybrid motor, which is controlled by information processing unit 4 (hereinafter referred to as "CPU") through drive circuit 7. Four signal wires are connected from CPU 4 to drive circuit 7, each wire corresponding to one of driving coils in the stepping motor, so that the motor can be operated in 2 phases or in 1-2 phases. Signal waveforms suitable for driving stepping motor 9 are known and, therefore, will not be further described here.

Magnetic head 1, which is an example of magnetic signal detection means, converts the MICs on medium 8 into electrical signals. Because magnetic heads suitable for such purpose are known, a detailed description is omitted here. The signals, after being converted, are amplified by amplifier 2. It should be noted that amplifier 2 may be omitted if the amplitudes of the output signals from magnetic head 1 are large enough. However, because the output signal from magnetic head 1 is generally a current, the current should be converted to voltage in order to accommodate to the signal processing in subsequent steps. At fixed sampling intervals, the amplified electrical signals are sampled and A/D converted by A/D converter 3. The digital samples are stored by CPU 4 in memory circuit 5 in the order in which they were sampled.

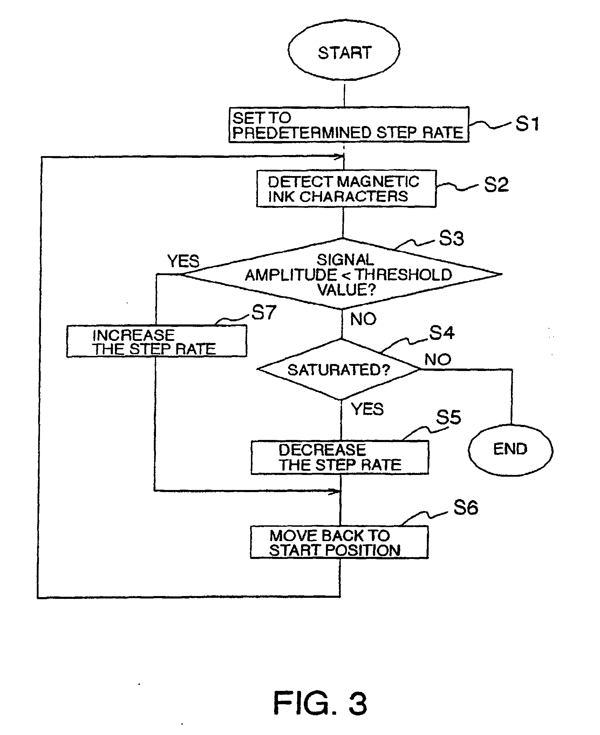

Fig. 3 is a flowchart that indicates the control sequence employed in the present embodiment. First, the operation in case of MICs having a positive scattering will be described. In step S1, CPU 4 sets the step or pulse rate for stepping motor 9 to a specified value. In step S2, medium 8 is transported. The waveforms of the electrical signals that are generated from the MICs printed on medium 8 are stored in memory 5 in the form of samples as described above.

After the samples are stored, in step S3, the CPU checks whether the maximum one of the stored samples is smaller than a certain threshold value. This processing will be described later. In the assumed case of positive scattering the maximum sample will be larger than the threshold value and the process proceeds to step S4. In step S4, CPU 4 checks whether there are any saturation intervals (as shown in Fig. 6) in the signal waveforms represented by the stored samples. The check in step S4 is performed by differentiation. Because digital samples are employed in this embodiment, differentiation calculates the difference between the two samples of each pair of successive samples. Existence of a saturation interval is concluded if for a continuous sequence of three or more pairs the difference is zero. The length of the sequence, i.e., the number of pairs with zero difference represents the width of the respective saturation interval.

When a saturation interval is detected in this manner, in step S5, CPU 4 sets the step rate for stepping motor 9 to a value lower than the value used for obtaining the present samples. To accomplish this, first the CPU extracts the saturation interval of the greatest width among all saturation intervals that were found. This is done, for example, by selecting the saturation interval having the greatest number of pairs with zero difference. Then, the CPU determines, based on the maximum width of all saturation intervals as an amplitude information, either the absolute value of the new step rate or an incremental correction value representing the amount by which the previous step rate is to be reduced. Finally, the CPU changes the previous step rate in terms of the absolute value or incremental correction value. Because the magnitude of the peak values generally is proportional to the speed of the medium relative to the magnetic head, step rates should preferably be changed by using the incremental correction value rather than the absolute value.

For determining the incremental correction value, the relationship between the amplitude information (saturation interval width) and the corresponding incremental correction values may be preestablished and stored in memory, such as in ROM, in the form of a table. This scheme permits the rapid setting of new transport speeds.

Upon completion of the step rate setting process in step S5, in step S6 CPU 4 controls motor 9 to drive the transport mechanism in the reverse direction so that medium 8 is returned to the read start position. Subsequently, steps S2, S3 and S4 are repeated based on the new transport speed of medium 8. If either in step S3 or step S4 it is detected that the signal amplitudes are still not suitable the speed will be changed another time, as required, i.e., increased in step S7 or further decreased in step S5. Otherwise, i.e., if the signal waveform is like that shown in Fig. 8, the speed control process will end and character recognition based on the detected signal performed.

By contrast, for avoiding the problems in the case of a negative scattering (Fig. 7) CPU 4 sets a predetermined threshold value and, in step S3, it compares the peak values of the stored samples with the threshold value. If the maximum peak value is less than the threshold value, in step S7, CPU 4 increases the step rate for stepping motor 9, controls motor 9 to return medium 8 to the read start position (step S6) and then performs another detection with the increased transport speed of medium 8 (S2).

In step S7, when all samples are below the threshold value, the CPU obtains corresponding amplitude information and determines either the absolute value of the new step rate or the incremental correction value by which the step rate must be increased according to that amplitude information. The CPU then changes the previous step rate by using that absolute or incremental correction value. For obtaining the amplitude information, CPU 4 extracts the sample closest to the threshold value, the average of two or more of the samples closest to the threshold value or the difference between the threshold value and either the one closest sample or the average. In the same manner as it has been described for a speed decrease, the relationship between such amplitude information and the incremental correction value is preferably preestablished and stored in memory as a table.

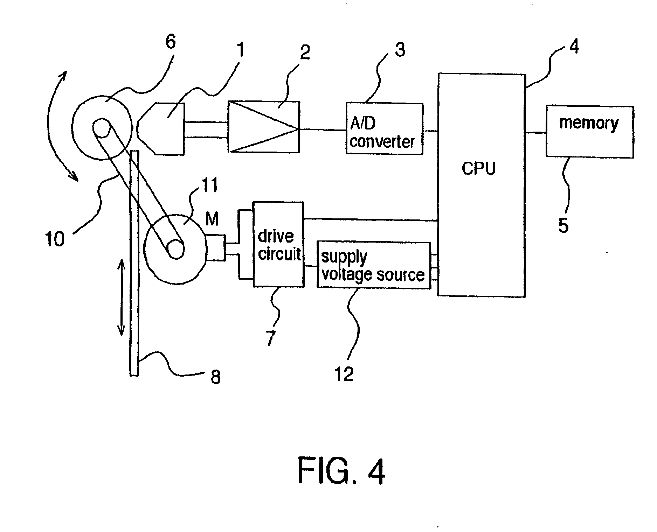

Fig. 4 shows the constitution of another embodiment of the present invention. DC motor 11 is used as a drive source for the transport mechanism shown in Fig. 2. A supply voltage source 12 is provided for supplying a specified drive voltage to DC motor 11. Supply voltage source 12 is of a type that allows varying the voltage to be applied to DC motor 11. Changing the applied voltage changes the transport speed of the medium. In Fig. 4, three control wires are connected from CPU 4 to the supply voltage source 12 so that the supplied voltage can be varied in three steps. Because voltage sources with a variable output voltage are known, a more detailed description is omitted here. The simplest configuration may be a combination of a D/A converter and a voltage follower.

The operation of this second embodiment is substantially the same as that of the first embodiment. The difference between the embodiments is that where the step rate is increased/decreased in the first embodiment, the voltage applied to motor 11 is increased/decreased in the second embodiment so as to change the medium transport speed under the conditions and with the effects explained above.

In the preferred embodiments described above, the amplitude of the electrical signal from the magnetic head is compared against a threshold value to determine whether the transport speed of the medium needs to be increased. The signal is further checked for a saturation interval to determine whether the transport speed of the medium needs to be decreased. Instead of checking for a saturation interval, the amplitude may be compared against another threshold value higher than the first mentioned one and lower than the saturation level of amplifier 2. Checking for a saturation interval is advantageous, however, since the maximum width of the saturation intervals provides a measure for the extent to which the speed should be decreased.

## Claims

1. A detection apparatus for detecting magnetic patterns carried on a medium (8), comprising:
detection means (24; 1) for detecting magnetic signals and converting them into electrical signals,
transport means (23) for moving said medium relative to said detection means, said transport means being arranged such that, in response to the relative movement between said medium and said detection means, said detection means is capable of detecting magnetic signals representing magnetic patterns on said medium,
amplitude detection means (28; 4) for detecting the amplitude of said electrical signals output from said detection means; and
speed control means (30; 4) for controlling the speed of said relative movement in response to amplitude information (29) from said amplitude detection means;
**characterized in that**
said magnetic patterns are magnetic ink characters,
peak detection means are provided for detecting the relative timing of peaks of said electrical signals,
said amplitude detection means (28; 4) comprises means for detecting a saturation of said electrical signals, and
said speed control means (30; 4) Is adapted to decrease said speed when said amplitude information (29) indicates said amplitude corresponds to a saturation value and to increase said speed when said amplitude information (29) indicates said amplitude is smaller than a predetermined threshold value.

2. The apparatus according to Claim 1, wherein said amplitude information (29) represents the extent of saturation, if any.

3. The apparatus according to Claim 1, wherein said transport mechanism (23) comprises: a transport roller (6) for transporting the medium (8) by friction; a motor (9; 11) for rotationally driving said transport roller; and a motor drive circuit (7) for supplying drive signals to said motor.

4. The apparatus according to Claim 3, wherein said motor (9) is a stepping motor, and said speed control means (30; 4) comprises step-rate control means for controlling the step rate of said drive signals.

5. The apparatus according to Claim 3, wherein said motor (11) is a direct-current motor, and said speed control means comprises (30; 4) voltage control means for controlling the voltage of said drive signals.

6. The apparatus according any one of the preceding Claims, wherein said speed control means (30; 4) comprises:
speed determining means responsive to said amplitude information (29) for determining an incremental speed correction value; and
speed update means for changing the current speed setting in accordance with said incremental speed correction value.

7. The apparatus according to Claim 6, wherein
said amplitude detection means (28; 4) comprises A/D conversion means for converting said electrical signals into digital signals and for outputting said amplitude information (29) as a digital value; and
said speed determining means comprises memory means (5) for storing as a conversion table the relationship between amplitude information values and associated incremental speed correction values.

8. A method of detecting magnetic patterns carried on a medium (8), comprising the steps of:
(a) moving said medium relative to magnetic signal detection means (24; 1),
(b) converting magnetic signals detected by said magnetic signal detection means (24; 1) into electrical signals,
(c) detecting the amplitude of the electrical signals obtained in step (b) and generating amplitude information (29) indicative of the detected amplitude; and
(d) controlling the speed of said relative movement in response to said amplitude information;
**characterized in that**
said magnetic patterns are magnetic ink characters, and step (d) comprises:
decreasing said speed when said amplitude information (29) indicates said amplitude corresponds to a saturation value and increasing said speed when said amplitude information (29) indicates said amplitude is smaller than a predetermined threshold value.

9. The method according to Claim 8, wherein
when the amplitude corresponds to a saturation value, said amplitude information (29) indicates the extent by which the amplitude is saturated, while
when the amplitude is smaller than said threshold value, said amplitude information (29) indicates the extent by which the maximum signal peak is smaller than said threshold value.

10. The method according to Claim 8 or 9, wherein step (d) comprises the steps of:
(d1) determining, when said amplitude information (29) indicates the amplitude corresponds to a saturation value or is smaller than said threshold value, an incremental speed correction value in accordance with said amplitude information; and
(d2) changing the current moving speed by said incremental speed correction value.

11. The method according to Claim 8, 9 or 10, wherein, when the speed is decreased or increased in step (d), the medium is moved back to the position from which step (a) started, and steps (a) to (d) are repeated with the new moving speed.

## Patentansprüche

1. Erkennungsvorrichtung zur Erkennung magnetischer Muster auf einem Medium (8), umfassend:
Detektormittel (24; 1) zur Erfassung magnetischer Signale und deren Umwandlung in elektrische Signale,
Transportmittel (23) zur Bewegung des Mediums relativ zu den Detektormitteln, wobei die Transportmittel derart ausgebildet sind, dass aufgrund der relativen Bewegung zwischen dem Medium und den Detektormitteln die Detekformittel in der Lage sind, magnetische Signale zu erfassen, welche magnetische Muster auf dem Medium darstellen,
Amplitudenermittlungsmittel (28; 4) zur Ermittlung der Amplitude der elektrischen Signale, welche von den Detektormitteln ausgegeben werden; und
Geschwindigkeitssteuermittel (30; 4) zur Steuerung der Geschwindigkeit der relativen Bewegung als Antwort auf Amplitudeninformation (29) von den Amplitudenermittlungsmitteln;
**dadurch gekennzeichnet, dass**
die magnetischen Muster Zeichen aus magnetischer Tinte sind,
Spitzendetektormittel vorgesehen sind, um die relative Zeitlage von Spitzen der elektrischen Signale zu ermitteln,
die Amplitudenermittlungsmittel (28; 4) Mittel zur Ermittlung einer Sättigung der elektrischen Signale umfassen, und
die Geschwindigkeitssteuermittel (30; 4) dazu ausgelegt sind, die Geschwindigkeit zu verringern, wenn die Amplitudeninformation (29) angibt, dass die Amplitude einem Sättigungswert entspricht, und die Geschwindigkeit zu erhöhen, wenn die Amplitudeninformation (29) angibt, dass die Amplitude geringer als ein vorgegebener Schwellenwert ist.

2. Vorrichtung nach Anspruch 1, bei der die Amplitudeninformation (29) das Ausmaß der Sättigung, falls vorhanden, wiedergibt.

3. Vorrichtung nach Anspruch 1, bei der der Transportmechanismus (23) folgendes umfasst: eine Transportrolle (6) zum Transport des Mediums (8) durch Reibung; einen Motor (9; 11) zum drehenden Antrieb der Transportrolle; und eine Motortreiberschaltung (7) zur Lieferung der Steuersignale an den Motor.

4. Vorrichtung nach Anspruch 3, bei der der Motor (9) ein Schrittmotor ist und die Geschwindigkeitssteuermittel (30; 4) Schrittratensteuermittel zur Steuerung der Schrittrate der Steuersignale umfassen.

5. Vorrichtung nach Anspruch 3, bei der der Motor (11) ein Gleichstrommotor ist und die Geschwindigkeitssteuermittel (30; 4) Mittel zur Spannungssteuerung zur Steuerung der Spannung der Steuersignale umfassen.

6. Vorrichtung nach einem der vorhergehenden Ansprüche, bei der die Geschwindigkeitssteuermittel (30; 4) folgendes umfassen:
Mittel zur Ermittlung der Geschwindigkeit aufgrund der Amplitudeninformation (29) zur Ermittlung eines inkrementellen Geschwindigkeits-Korrekturwertes; und
Mittel zum Aktualisieren der Geschwindigkeit, um die aktuelle Geschwindigkeitseinstellung in Übereinstimmung mit dem inkrementellen Geschwindigkeits-Korrekturwert zu ändern.

7. Vorrichtung nach Anspruch 6, bei der
die Amplitudenermittlungsmittel (28; 4) Mittel zur A/D Umwandlung umfassen, mit denen die elektrischen Signale in digitale Signale zur Ausgabe der Amplitudeninformation (29) als digitaler Wert umgewandelt werden; und
die Geschwindigkeitssteuermittel Speichermittel (5) zur Speicherung der Beziehung zwischen Amplitudeninformationswerten und den dazugehörigen inkrementellen Geschwindigkeits-Korrekturwerten in Form einer Umsetzungstabelle umfassen.

8. Verfahren zur Ermittlung magnetischer Muster auf einem Medium (8), umfassend die folgenden Schritte:
(a) Bewegen des Mediums relativ zu Magnetsignaldetektormitteln (24; 1),
(b) Umwandeln magnetischer Signale, die durch die Magnetsignaldetektormittel (24; 1) erfasst wurden, in elektrische Signale,
(c) Ermittlung der Amplitude der in Schritt (b) gewonnenen elektrischen Signale und Erzeugen von Amplitudeninformation (29), welche die ermittelte Amplitude angeben; und
(d) Steuern der Geschwindigkeit der relativen Bewegung als Antwort auf die Amplitudeninformation;
**dadurch gekennzeichnet, dass**
die magnetischen Muster Zeichen aus magnetischer Tinte sind, und Schritt (d) folgendes umfasst:
Verringern der Geschwindigkeit, wenn die Amplitudeninformation (29) angibt, dass die Amplitude einem Sättigungswert entspricht, und Erhöhen der Geschwindigkeit, wenn die Amplitudeninformation (29) angibt, dass die Amplitude kleiner als ein vorgegebener Schwellenwert ist.

9. Verfahren nach Anspruch 8, bei dem,
wenn die Amplitude einem Sättigungswert entspricht, die Amplitudeninformation (29) das Ausmaß angibt, in welchem die Amplitude gesättigt ist, während,
wenn die Amplitude kleiner als der Schwellenwert ist, die Amplitudeninformation (29) das Ausmaß angibt, um welches die maximale Signalspitze kleiner als der Schwellenwert ist.

10. Verfahren nach Anspruch 8 oder 9, bei dem Schritt (d) die folgenden Schritte umfasst:
(d1) Festlegung eines inkrementellen Geschwindigkeits-Korrekturwertes in Übereinstimmung mit der Amplitudeninformation, wenn die Amplitudeninformation (29) angibt, dass die Amplitude einem Sättigungswert entspricht oder kleiner als der Schwellenwert ist; und
(d2) Ändern der aktuellen Bewegungsgeschwindigkeit durch den inkrementellen Geschwindigkeits-Korrekturwert.

11. Verfahren nach Anspruch 8, 9 oder 10, bei dem, wenn die Geschwindigkeit in Schritt (d) verringert oder vergrößert wird, dass Medium zurück zu derjenigen Position bewegt wird, von der Schritt (a) gestartet wurde, und die Schritte (a) bis (d) mit der neuen Geschwindigkeit der Bewegung wiederholt werden.

## Revendications

1. Dispositif de détection permettant de détecter des motifs magnétiques présents sur un support (8), comprenant :
un moyen de détection (24 ; 1) destiné à détecter des signaux magnétiques et à les convertir en signaux électriques,
un moyen de transport (23) destiné à déplacer le support par rapport au moyen de détection, le moyen de transport étant conçu de telle façon que, en réponse au mouvement relatif entre le support et le moyen de détection, le moyen de détection soit capable de détecter des signaux magnétiques représentant des motifs magnétiques présents sur un support,
un moyen de détection d'amplitude (28 ; 4) destiné à détecter l'amplitude des signaux électriques émis par le moyen de détection ; et
un moyen de commande de vitesse (30 ; 4) destiné à commander la vitesse du mouvement relatif en réponse à des informations d'amplitude (29) provenant du moyen de détection d'amplitude ;
**caractérisé en ce que**
les motifs magnétiques sont des caractères magnétiques,
un moyen de détection de crête est fourni pour détecter la synchronisation relative des crêtes des signaux électriques,
le moyen de détection d'amplitude (28 ; 4) comprend un moyen permettant de détecter une saturation des signaux électriques, et
le moyen de commande de vitesse (30 ; 4) est adapté pour réduire la vitesse lorsque les informations d'amplitude (29) indiquent que l'amplitude correspond à une valeur de saturation et à augmenter la vitesse lorsque les informations d'amplitude (29) indiquent que l'amplitude est inférieure à une valeur seuil prédéterminée.

2. Dispositif selon la revendication 1, dans lequel les informations d'amplitude (29) représentent l'ampleur de la saturation éventuelle.

3. Dispositif selon la revendication 1, dans lequel le mécanisme de transport (23) comprend : un rouleau de transport (6) destiné à transporter le support (8) par friction ; un moteur (9 ; 11) destiné à entraîner par rotation le rouleau de transport ; et un circuit de commande de moteur (7) destiné à fournir des signaux de commande au moteur.

4. Dispositif selon la revendication 3, dans lequel le moteur (9) est un moteur pas à pas et le moyen de commande de vitesse (30 ; 4) comprend un moyen de commande de fréquence de pas permettant de commander la fréquence de pas des signaux de commande.

5. Dispositif selon la revendication 3, dans lequel le moteur (11) est un moteur à courant continu et le moyen de commande de vitesse (30 ; 4) comprend un moyen de commande de tension permettant de commander la tension des signaux de commande.

6. Dispositif selon l'une quelconque des revendications précédentes, dans lequel le moyen de commande de vitesse (30 ; 4) comprend :
un moyen permettant de déterminer la vitesse en fonction des informations d'amplitude (29) afin de déterminer une valeur incrémentielle de correction de vitesse ; et.
un moyen permettant d'actualiser la vitesse en changeant le réglage actuel de vitesse en fonction de la valeur incrémentielle de correction de vitesse.

7. Dispositif selon la revendication 6, dans lequel
le moyen de détection d'amplitude (28 ; 4) comprend un moyen de conversion analogique-numérique destiné à convertir les signaux électriques en signaux numériques et à sortir les informations d'amplitude (29) sous la forme d'une valeur numérique ; et
le moyen permettant de déterminer la vitesse comprend un moyen formant mémoire (5) destiné à stocker, sous la forme d'une table de conversion, la relation entre les valeurs des informations d'amplitude et les valeurs incrémentielles de correction de vitesse associées.

8. Procédé de détection de motifs magnétiques présents sur un support (8), comprenant les étapes consistant à :
(a) déplacer le support par rapport au moyen de détection (24 ; 1) de signaux magnétiques,
(b) convertir les signaux magnétiques détectés par le moyen de détection (24 ; 1) de signaux magnétiques en signaux électriques,
(c) détecter l'amplitude des signaux électriques obtenus à l'étape (b) et générer des informations d'amplitude (29) indiquant l'amplitude détectée ; et
(d) commander la vitesse du mouvement relatif en réponse aux informations d'amplitude ;
**caractérisé en ce que**
les motifs magnétiques sont des caractères magnétiques, et **en ce que** l'étape (d) comprend :
la réduction de la vitesse lorsque les informations d'amplitude (29) indiquent que l'amplitude correspond à une valeur de saturation et l'augmentation de la vitesse lorsque les informations d'amplitude (29) indiquent que l'amplitude est inférieure à une valeur seuil prédéterminée.

9. Procédé selon la revendication 8, dans lequel
lorsque l'amplitude correspond à une valeur de saturation, les informations d'amplitude (29) indiquent l'ampleur de la saturation de l'amplitude, alors que
lorsque l'amplitude est inférieure à la valeur seuil, les informations d'amplitude (29) indiquent dans quelle mesure la crête maximale des signaux est inférieure à la valeur seuil.

10. Procédé selon la revendication 8 ou 9, dans lequel l'étape (d) comprend les étapes consistant à :
(d1) déterminer, lorsque les informations d'amplitude (29) indiquent que l'amplitude correspond à une valeur de saturation ou est inférieure à la valeur seuil, une valeur incrémentielle de correction de vitesse en fonction des informations d'amplitude ; et
(d2) modifier la vitesse actuelle de déplacement de la valeur incrémentielle de correction de vitesse.

11. Procédé selon la revendication 8, 9 ou 10, dans lequel la vitesse est réduite ou augmentée à l'étape (d), le support est ramené vers la position à laquelle l'étape (a) débute, et les étapes (a) à (d) sont répétées avec la nouvelle vitesse de déplacement.
